# EUROPEAN PATENT APPLICATION

(11) **EP 1 562 127 A1**
(43) Date of publication of application: **10.08.2005**
(21) Application number: 04075326.1
(22) Date of filing: 03.02.2004
(51) Int. Cl.: G06F 17/30, G06F 9/44, G06F 17/24

(54) **A database management system and a method of managing a database**

(71) Applicant: SAP AG, 69190 Walldorf (DE)
(72) Inventor: Werner,Horst, 69242 Rettigheim (DE); Beringer, Joerg, 60431 Frankfurt (DE); Moore,Dennis B., Palo Alto,CA 94304 (US)
(74) Representative: Prins, Adrianus Willem, Mr. Ir.

(57) **Abstract**

The invention relates to a database management system and a method of managing a database. The database management system for managing a database, wherein the database stores a plurality of entities related to each other by a plurality of relations. The database management system comprising:
a user interface for interfacing with the database in a situation,
a context modeller for modelling a context representation, wherein the context modeller is arranged to model the context representation in accordance with the situation using a semantic net, which includes a subset of the entities which are identified by the context modeller as being relevant to the situation, so that when the context representation is applied to the database the behaviour of the database is adapted in accordance with the situation.

## Description

### Technical Field

The invention relates to a database management system and a method of managing a database.

### Background to the Invention and Prior Art

It is known to provide applications, for example business applications, which allow the user to work in different contexts. Such applications adapt the information displayed, and the actions or objects which the user may select, according to the respective context. However this context is not explicitly modelled, it is rather implicitly given by the various screens of an application's user interface. Very limited context information is kept when the user switches to another screen. Whilst some applications use lists of recently or frequently used objects, the relationship of these objects with respect to the user's activities is unknown to the application,
Therefore, one problem with conventional applications is that the context information is poor and unavailable for generic algorithms, instead the context sensitivity has to be hard coded for each screen.

It is an object of the present invention to address those problems encountered with conventional applications. In particular, it is an object of the present invention to improve the context representation in the application.

### Summary of the Invention

According to a first aspect of the invention, there is provided a database management system for managing a database, wherein the database stores a plurality of entities related to each other by a plurality of relations, the database management system comprising:
a user interface for interfacing with the database in a situation,
a context modeller for modelling a context representation, wherein the context modeller is arranged to model the context representation in accordance with the situation using a semantic net, which includes a subset of the entities which are identified by the context modeller as being relevant to the situation, so that when the context representation is applied to the database the behaviour of the database is adapted in accordance with the situation.
By integrating a semantic net into the working user interface of an application a model of the user's current context can be made which is processable by a generic algorithm, i.e. the same processing logic works for all screens/contexts. In this way, the context sensitivity of the database application is enhanced in the following sense: by taking into account relevant entities in the context representation, the complexity of the data delivered by the database to the user is reduced by hiding information which is not relevant in the current context. When the user is required to select from a list of potential values to fill in an input field, the choice can be narrowed to such values which are especially probable in the current context. A further advantage of the present invention, is that, the application can actively indicate to the user facts or entities which are of special interest within the current context.

According to a second aspect of the present invention, there is provided a method of managing a data stored in a database, wherein the database stores a plurality of entities related to each other by a plurality of relations, the method comprising the steps of:
providing a user interface for interfacing with the database in a situation, modelling a context representation in accordance with the situation, wherein the modelling step includes the step of identifying a subset of the plurality of entities which are relevant to the situation, forming a semantic net including the subset of entities and the relations between the entities included in the subset of entities, and using the semantic net to model the context representation,
applying the context representation to the database, so that the behaviour of the database is adapted in accordance with the situation.

According to a third aspect of the present invention, there is provided a user terminal comprising means operable to perform any of the methods of the first aspect of the present invention.

According to a fourth aspect of the present invention, there is provided a program storage device readable by a processing apparatus, said device embodying a program of instructions executable by the processor to perform the steps of the methods of the first aspect of the present invention.

### Brief description of the drawings

In order that the invention may be more fully understood embodiments thereof will now be described by way of example only, with reference to the figures in which:
Figure 1 shows an architecture incorporating an embodiment of the present invention;
Figure 2 shows aspects of the architecture shown in Figure 1 in further detail; and
Figures 3a and 3b show a flow diagrams incorporating methods of managing a database in accordance with embodiments of the present invention, respectively.

### Description of the Preferred embodiments

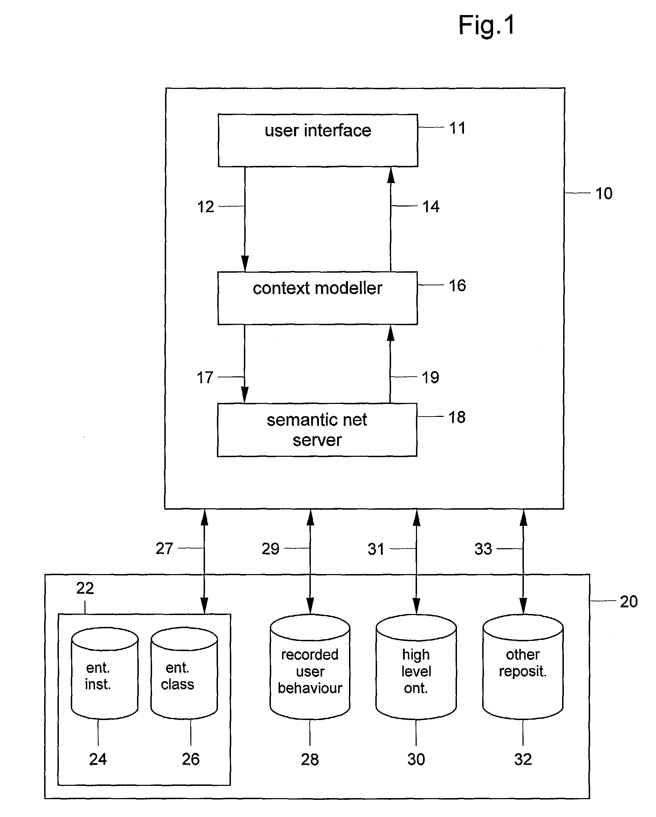

Figure 1 shows an architecture incorporating an embodiment of the present invention. A system 10 is shown on which the process described hereinafter may be implemented, in particular the data flow and data processing steps initiated by the database management system of an embodiment of the present invention are shown. The system 10 includes a user interface 11 which is a graphic user interface (GUI), with which a user interacts. Typically, at any one time the user may be involved in an action or a process 12 or both.

The system also includes a context modeller 16 and an semantic net server 18. The action or process 12 is input to the context modeller 16. Data may be exchanged 12, 14 between the user interface 11 and the context modeller 16. Similarly, data may be exchanged 17, 19 between the context modeller 16 and the semantic net server 18.

The context modeller 16 determines which entities 61 are to form the context representation. The context representation typically includes at least one component. The context modeller 16 in association with the semantic net server 18 further stores references to these entities 61, which may be recently used entities 61 and/or entities 61 related to these, by means of a semantic net representation. The context of an entity or a situation as defined by the process or action is a collection of facts and entities 61 which are of special importance for that entity or situation and which usually have a direct or indirect relationship to the entity or situation. Within a business application, such as a database, a context may be defined for a variety of entities 61 or a situation including, but not limited to a user, a session or a business entity. For a user the context may include entities 61 including his role, projects, personal preferences etc. For a session the context may include entities 61 including a user, last actions, manipulated business entities 61 etc. For a business object the context may include entities 61 including past projects, orders for a customer etc. As will be described hereinafter a business object is an entity stored in a database. A business application 20 may typically include a database 22 in which business entities 61 are stored.

A combination of different contexts, for example a user context and a session context, may be combined to form a current context within a session. The elements ("elements" are referred to as being entities 61 belonging to a group of entities 61) of such a composed context may have different temporal validities. The temporal validity may be defined by the system 10 and/or by a user. For example, there are long-term elements such as the industry branch of the user's company, the user's role in that company, his current projects, his activities in the last few days. Similarly, there are short term elements such as, but not limited to the current transaction, and entities 61 displayed or manipulated in the current session etc.

Technically, context may be represented by a number of instances of business entities 61, processes/actions, or situations. A situation may be defined by at least one or a process or action.

As mentioned above, the context modeller 16 identifies context elements or entities 61, and entities 61 related to these for the context representation by means of a semantic net representation.
Within the database 20 there are representations of business entities 61 which are related to each other. This relation can be explicitly modelled in the database. In this case it is called first level relatedness.
The relatedness can also be implicitly contained by the database if there is an intermediate business object to which two other business entities 61 are related. This would be second level relatedness. Other chains of relations between business entities 61 can be found and depending on the length of such a chain there is 3rd level, 4th level relatedness and so on.
A problem encountered in evaluation of relatedness of second and higher levels is the huge amount of data that must be evaluated. If an average entity is (directly) related to 20 other entities 61, there are 400 entities 61 with a second level relatedness, 8000 third-level-related entities 61 and 160000 fourth-level-related entities 61. So if higher-level relatedness is to be displayed to the user, an intelligent selection of relevant entities 61 needs to be performed. The relevance of entities 61 is context dependent. The context modeller 16 ascertains the relevance of the entities 61 to determine the limited object set to be evaluated.

In a further embodiment of the present invention, the relatedness between two entities 61 may be not at all in the database model but in the mind of the user. This kind of relatedness is included into a database, according to an embodiment of the present invention, if an appropriate mechanism is provided that works independently of the database's entity relationship model. For example, such an independent mechanism may be explicitly declared by the user or deduced from his behaviour. According to a further embodiment of the present invention, the semantic net containing the plurality of entities 61 corresponding to those entities 61 stored in the database 22 is enriched by an ontology representing general and domain-specific knowledge. Such an ontology allows the evaluation of relatedness between context entities 61 based on superordinate semantic information, for example that a company has employees and that a user is an employee, etc. Thus, the application, in particular with respect to the database 22 can, to a certain degree draw conclusions about the current context that would not be possible by evaluation of the mere database contents or structure.

As mentioned, the context modeller 16 identifies the context representation from a semantic net stored in the semantic net server 18. The context modeller 16 uses the data model offered by the semantic net server 18. In particular, the context modeller 16 identifies a subset of the data stored in the semantic net server 18 to determine a context representation. The semantic net server 18 may be regarded as an access layer for the context modeller 16 providing the data required to the context modeller 16. A semantic net is a data structure made up of nodes and relations between those nodes. The nodes represent terms and they are embedded in abstraction hierarchy by means of the special relation type "is a". A semantic net is the common way of representing ontologies in a computer system.

Whilst it is known to provide a semantic net as an abstraction layer to search and navigate on top of an existing database, it is not known to model context using a semantic net. In contrast, according to an embodiment of the present invention, context is modelled in a business application by storing context-relevant entities 61 and entities 61 related to these by means of a semantic net. Representations of processes and actions may also be integrated in this data structure as well as a general knowledge ontology.
An ontology is an explicit specification of a conceptualization. A conceptualization is an abstract, simplified view of the world it is desired to represent for some purpose. An ontology contains the vocabulary (terms or labels) and the definition of the concepts and their relationships for a given domain. An ontology is a representation that exists independent of any computer models or implementations.

The process or action 12 may include a request to have certain data represented or displayed from a database 22 which forms part of an application. The invention is not limited with respect to the type of application. For example, the application may be a business application or the like. In Figure 1 a business application 20 is shown. The business application includes a database 22 in which business entities 61 are stored. In a first storage medium 24 entity instances are stored. In a second storage medium 26 entity classes are stored. The first and second storage media 24, 26 represent logical storage media. It is not necessary that the first and second storage media are embodied by physical storage media. The business application 20 further includes a recorded user behaviour storage medium 28 for storing user behaviour, a high level ontology storage medium 30 for storing a high level ontology and other repositories 32 for storing other data. The database 22, the recorded user behaviour storage medium 28, the high level ontology storage medium 39 and the other repositories 32 may exchange data with the user interface 10 via communication links 27, 29, 31 and 33, respectively.

Having initiated a process or action, the user receives an output in the form of a delivery of data 14 from the database 22 representing the results of the process or action. The delivery of data 14 is influenced in accordance with the context representation modelled by the context modeller 16. In particular, the user's behaviour is observed by the system 10, in particular in terms of the actions 66 and processes 65 being carried out, and is used by the context modeller 16 to model the context representation.
In the example shown only one database is shown. The invention is not limited in this respect since the context modeller 16 may be arranged to model a context representation to influence the delivery of data from at least one database. For example, a plurality of databases may influenced by the context representation modelled by the context modeller 16.

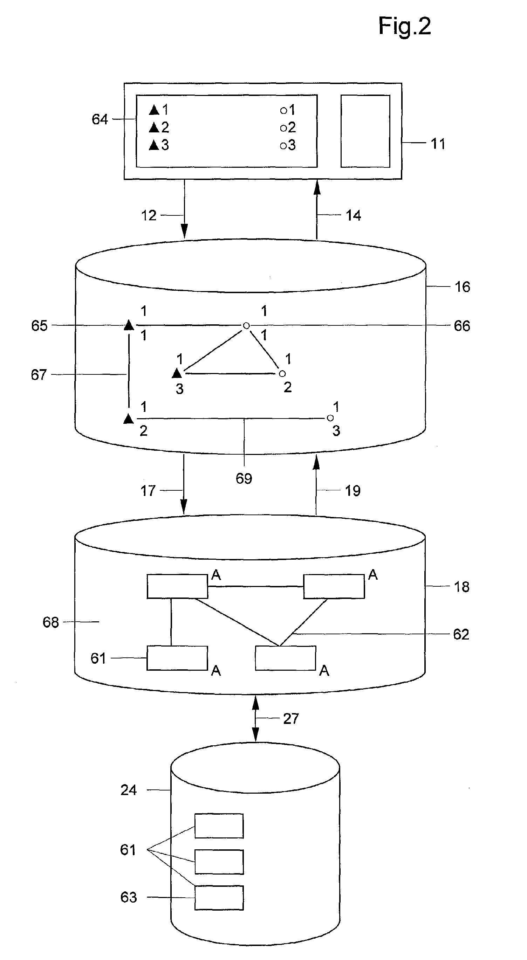

Figure 2 shows aspects of the architecture shown in Figure 1 in further detail. In particular, Figure 2 shows a plurality of entities 61 stored in the first storage medium 24. For the case that the entities 61 form a group, one entity within that group is referred to as an element 63. The semantic net server 18 stores a semantic net 68 representing the entities 61 and the relations 62 between the entities 61. In a particular embodiment an attribute A is associated with each entity. The attribute A is a value included in the representation of an entity, and may for example, be a number or a word. In this way, it is not necessary to use different tables or structures for different entity types. Instead, it is possible to represent the different entity types in a uniform manner. In order to ascertain what type an entity is, the type attribute A is evaluated to find out for example, that a particular entity "is a person" or "is a product", etc.
Further, with reference to Figure 2, the user is typically involved with processes and/or actions. The processes and/or actions give rise to a situation. The context modeller 16 observes the behaviour of the user in terms of the guided procedures 64 carried out. Representations of the processes 65 and actions 66 followed are created. A semantic net 67 of the guided procedures followed including the relations 69 between the representations of the processes 65 and actions 66 is formed. It will be understood that the representations of the processes 65 and actions 66 will include at least one of the entities 61 stored in the first storage medium 24 and hence, included in the semantic net 68 stored in the semantic net server 18. The context modeller 16 identifies the entity or entities 61 associated with the particular processes and actions being followed at a particular moment in time and models a context representation to include the identified entity or entities 61.

The following example of the present invention according to one embodiment is given. The particular business application is concerned with staffing a project. The user creates the representation of a new project in a business application. The project has the following attributes or relations
- customer
- project goals, defined by key performance indicators and corresponding values
- project phases
- tasks
- persons assigned to these tasks
- project status.

The business application includes a template for that type of project containing the following tasks for the first phase:
- clarification of customer requirements
- high-level feasibility evaluation
- technical evaluation
- financial analysis
- contract preparation.

The semantic net representation appears as follows:
current screen: is assigned to project details,
current user: is assigned to Joe Miller.

Joe Miller
   is a user
   is responsible for Yancheng power plant
   is responsible for <list of past projects>
   has role project manager
   is part of department power plants
   is currently performing action "create project".
Yancheng power plant
   is a project
   is located in Yancheng
   has customer Yancheng Steel Works
   contains clarification of customer requirements contains technical evaluation
   contains financial analysis
   contains contract preparation
   has status new.
project manager
   is a role
   is responsible for a project
   has access to budget planning
   can perform "create project"
   can perform "task assignment".
power plants
   is a department
   contains power plants engineering team
   contains power plants accounting team.
create project
   is an action
   refers to project
   is part of project management tool
   is predecessor of assigning tasks.
assign tasks
   is an action
   is part of project management tool
   refers to task
   refers to person.
Yancheng steel works
   is a customer
   is located in Yancheng
   has industry branch steel projection.
Yancheng
   is a city
   is part of China
.....etc...

The facts and entities 61 listed above are examples of entities 61. It is entities 61 which define the components of the context representation.

The semantic net representation may be built up from various sources, such as databases, predefined patterns or the like.

It is known to provide a semantic net on top of the contents of a database of an application for primarily search and navigation purposes, According to an embodiment of the present invention context relevant entities 61 and entities related to these 61 are stored by means of a semantic net. By providing semantic-net-based context representations in an application, the advantage over conventional applications is achieved that the behaviour of a user can be taken into account. In contrast to conventional semantic nets provided on top of a database, according to a further embodiment of the present invention, there is a limited number of entities 61 marked as relevant in the current context and that these entities 61 include a seamlessly integrated representation of the current situation, as defined for example, by the screen, user and/or actions, in addition to the database entities 61. It has been found that making a copy of the database takes too long if the context is to be accurately represented in a time dependent manner. Further, it has been found that it is sufficient to provide only the relevant propositions relevant to the user, rather than the whole database, in order to provide current context representation. The context modeller 16 models the context to provide a context representation relevant to the user. This is achieved by limiting the number of entities 61 offered to the user. In this way a seamless integration of the operation is achieved. The situation defining the context may be defined in a variety of ways. For example, it may be defined by at least one of the following: by observing a user behaviour by assessing the activities of other users, by observing process patterns that reoccur and by observing business processes. If a context representation is to be determined taking into account a business process, this may be done provided the business process is not hard coded.
By modelling a context representation as described above, the context representation is guided to reflect a current context. By soft coding the context representation it may be supported by the business application yet is readily changed.

Entities 61 may be added to the context representation when they are put into an input field or when they are viewed or touched in any other way. The context representation as modelled by the context modeller 16 exists independently from a particular screen or other user interface elements. However, the used screen may contribute entities 61 to the context.

Entities 61 may be removed from the context when they have not been used or touched for a predetermined time. The predetermined time may vary and may be set by a user. Alternatively, the system may determine the time interval.

An algorithm to identify context relevant items on the basis of the data structure outlined above, determines the set of all entities 61 related to any of the entities 61 in the context and then, in successive steps, to identify entities 61 related to any of the entities 61 in that set, which therefore are indirectly related to entities 61 in the context. Since the number of entities 61 in the set increases exponentially with each iteration, a numeric value for importance to relation types and entity types is assigned in order to be able to reduce the number of related items which are put into the set. For this purpose only entities 61 with a high importance or which referred to by a relation of high importance are added to the set of indirectly related entities 61. In this way, the entities 61 which may define the context are limited.

As mentioned above, according to an embodiment of the present invention, probable values for given input fields are determined and proposed by the system 100. This is referred to as slot filling. For the purpose of slot filling, the system reduces the set of indirectly related entities 61 to those elements fitting in the given slot/input field by entity type and/or other required attributes and relatedness to the current context. For this the current context as modelled by the context modeller 16 is taken into account.
The algorithm to identify relevant entities 61 in a large object set, that is an algorithm whose function is a context sensitive filter, determines the intersection between the given large object set and the set of indirectly or directly related entities 61.

In one embodiment of the present invention, there is provided a database management system for managing a database 22, wherein the database 22 stores a plurality of entities 61 related to each other by a plurality of relations 62, the database management system comprising:
a user interface 11 for interfacing with the database 22 in a situation 64,
a context modeller 16 for modelling a context representation, wherein the context modeller 16 is arranged to model the context representation using a semantic net 67, 68 which includes a subset of the entities which are identified by the context modeller 16 as being relevant to the situation 64, so that when the context representation is applied to the database 22 the behaviour of the database 22 is adapted in accordance with the situation 64.

In a preferred embodiment, the situation is defined by a procedure 64 which includes at least one of a process 65 and an action 66 of a user, wherein at least one of the action 66 and the process 65 relate to at least one of the plurality of entities 61. Further, the context representation may include at least one of the plurality of entities 61 related to the at least one process 65 and action 66. In a further embodiment the database management system comprises an semantic net server 18 for storing the plurality of entities 61 and the relations 62 between the entities 61 as the semantic net 67. In particular, the subset of the plurality of entities correspond to those entities related to the situation 64. In a preferred embodiment, the semantic net 67, 68 includes the relations 69 of the subset to each other and to the plurality of entities 61 falling outside the subset. In this way the most relevant entities to the situation are identified by the context modeller 16, so that the quality of data delivered to the user is enriched still further. In a further embodiment, entities 61 may be added to the context representation in accordance with the interaction of the user with the database 22. In this way, the context representation accurately reflects the situation in which the user is active.

Similarly, entities 61 may be removed from the context representation in accordance with the interaction of the user with the database 22.

In a further embodiment, the context representation includes components which remains unchanged over a relatively long period of time. Such a component may be the user's company department, his role and current projects. Similarly, the context representation may include components which remains unchanged over a relatively short period of time. For example, the last user interface screen that have been used. In this way, certain patterns of behaviour, such as personal preferences and best practices, are identified by the context modeller. These patterns may then be stored together with other patterns to further enhance the context sensitive user support.
In a further embodiment of the present invention, the invention has application in a generic spreadsheet interface, such as that described in our copending application. In particular, in a spreadsheet a view may be defined on a database in terms of a semantic net. The view is completely defined if each of the dependent cells of the spreadsheet has a title: the relation type linking the dependent cell to its respective master cell and the entity type of the entries in the cells. For example, a master cell may be entitled "work package" and a dependent cell may be entitled "is handled by Person". Whereas humans are able to understand the meaning of such a view even if the description is incomplete, for example, the titles may be shortened to "work package" and "person" or "work package" and "handled by", respectively, a conventional database management system would not necessarily understand the meaning of the shortened forms. By applying the present invention to a spreadsheet application, this disadvantage is overcome. In particular, using the context modeller based on a semantic net of the present invention, the following advantageous embodiments are provided. In one embodiment, an ambiguous title can be interpreted by means of the context. For example, the context could be analysed in respect to which relations exist between work packages and persons. The context modeller 16 is then arranged to find the most appropriate relation is "handled by" and auto-complete the view definition correspondingly. In a further embodiment, if the view is completely defined, there can occur ambiguities concerning the contents due to name identities when data is to be imported from the spread sheet into the database. For example, if the work package is handled by Joe Miller and it transpires that there are three persons in the company called Joe Miller, the context modeller 16 is arranged, in a further embodiment, to select the appropriate person due to his relatedness with respect to the current context. In yet a further embodiment, when data from the database is exported to the spreadsheet application, the context is used to limit the set of the exported entities to those relevant to the current context.

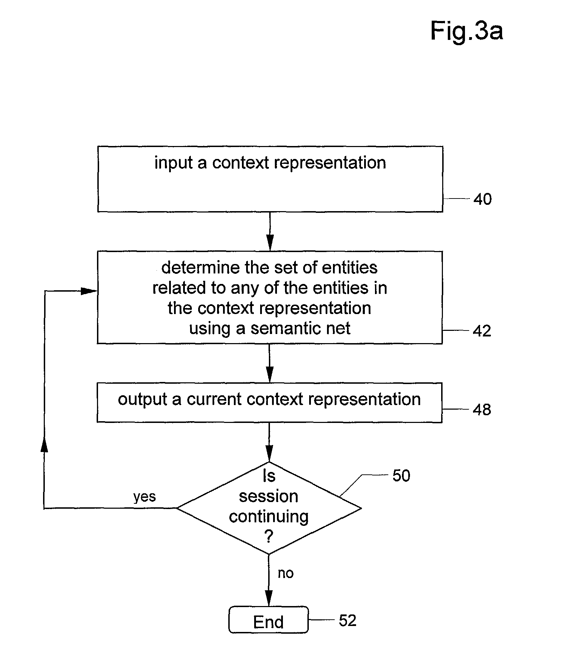

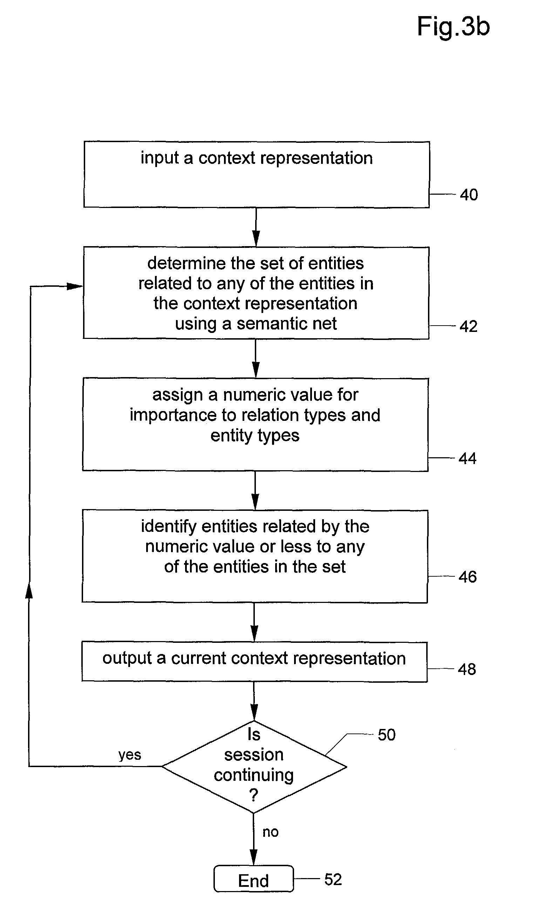

Figures 3a and 3b show a flow diagrams incorporating a method of managing a database in accordance with embodiments of the present invention. As can be seen in Figure 3a, a process 200 is shown which includes the steps of:
inputting a context representation (step 40) to a context modeller 16. This step may include accessing a context representation stored in the context modeller 16. A further step of determining the set of entities 61 related to any of the entities 61 in the context representation using a semantic net, which includes a subset of the entities which are identified by the context modeller as being relevant to the situation (step 42), outputting a current context representation (step 48). The current context representation replaces the context representation input or accessed in step 40 and represents an updated context representation. Subsequently, the context modeller 16 ascertains whether the session is to continue (step 50). If the session is not continuing the process comes to an end (step 52). If the session is continuing, the process returns to step 42. The method steps described above are carried out by the context modeller 16 in association with the semantic net server which stores the semantic net in which the entity types and relation types are represented. Figure 3b depicts an embodiment including the steps shown in Figure 3a. In addition, the embodiment shown in Figure 3b includes the additional steps of: assigning a numeric value for importance to relation types and entity types (step 44) and identifying entities related by the numeric value or less to any of the entities in the set (step 46). In this way, the context representation is modelled to include only the most relevant entities. The numeric value may be set by a user or by the system.

In a particular embodiment of the present invention, a method of managing a data stored in a database, wherein the database stores a plurality of entities 61 related to each other by a plurality of relations 62, the method comprising the steps of: providing a user interface 11 for interfacing with the database 22 in a situation 64, modelling a context representation, wherein the modelling step includes the step of identifying a subset of the plurality of entities which are relevant to the situation, forming a semantic net 68 including the subset of entities 65, 66 and the relations 69 between the entities included in the subset of entities, and using the semantic net 67, 68 to model the context representation, applying the context representation to the database 22, so that the behaviour of the database 22 is adapted in accordance with the situation 64. A further embodiment includes the step of defining the situation by a procedure 64 which includes at least one of a process 65 and an action 66 of a user, wherein at least one of the action 66 and the process 65 relate to at least one of the plurality of entities 61. In a further embodiment, the step of including in the context representation at least one of the plurality of entities 61 related to the at least one process 65 and action 66 is included. A yet further embodiment includes the further step of storing the plurality of entities 61 and the relations 62 between the entities 61 in an semantic net server 18 as the semantic net 67, 68. In a further embodiment the subset of the plurality of entities correspond to those entities related to the situation 64. A further embodiment includes the further step of including in the semantic net 67, 68 the relations of the subset to each other and to the plurality of entities falling outside the subset. Yet a further embodiment includes the further step of adding entities 61 to the context representation in accordance with the interaction of the user with the database 22. Similarly, the further step of removing entities from the context representation in accordance with the interaction of the user with the database 22 may also be included.

In a further embodiment, the present invention has application to a spreadsheet application. In particular, according to an embodiment of the present invention the user interface 11 is a spreadsheet application in which the situation is defined by a view on the database in terms of a plurality of entries in a plurality of respective cells, wherein each cell has a respective title. A further embodiment includes the step of completing an incomplete situation by identifying an appropriate relation between the respective titles. Yet a further embodiment includes the step of selecting an appropriate entity for the situation in accordance with the entity's relatedness to a current context. A further step of limiting a set of entities to be exported from the database to the spreadsheet in accordance with a current context may be carried out. In this way, the context modeller improves the situation as defined by the view. In particular, relation types between cells is determined by the context modeller 16 if it is not unambiguous, further the context modeller 16 can be used to determine the set of entities to be exported to the spreadsheet 11 from the database 22.

The present invention has application to a user terminal comprising means operable to perform any of the methods described. The present invention has application to a program storage device readable by a processing apparatus, said device embodying a program of instructions executable by the processor to perform the steps of any one of the methods described.

The invention as described can be implemented in digital electronic circuitry, or in computer hardware, firmware, software, or in combination thereof. An apparatus according to the present invention can be implemented in a computer program product tangibly embodied in a machine readable storage device for execution by a programmable processor; and method steps of the invention can be performed by a programmable processor executing a program of instructions to perform functions of the invention by operating on input data and generating output. The invention can be implemented in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Typically, a processor will receive instructions and data from a read-only memory and/or a random access memory. Typically, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of nonvolatile memory, including by way of example, semiconductor memory devices, such as EEPROM, and flash memory devices; magnetic disks such as internal hard disks and removable disks; magneto-optical disks; and CD-ROM disks. Any of the foregoing can be supplemented by, or incorporated in ASICs (application specific integrated circuits).
To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.
Whilst specific embodiments of the invention have been described above, it will be appreciated that the invention may be practiced otherwise than as described. The description is not intended to limit the invention. For example, the order steps be performed of the present invention is not limited to that order prescribed in the claims.

## Claims

1. A database management system for managing a database (22), wherein the database (22) stores a plurality of entities (61) related to each other by a plurality of relations (62), the database management system comprising:
a user interface (11) for interfacing with the database (22) in a situation (64),
a context modeller (16) for modelling a context representation, wherein the context modeller (16) is arranged to model the context representation in accordance with the situation using a semantic net (67, 68) which includes a subset of the entities which are identified by the context modeller (16) as being relevant to the situation (64), so that when the context representation is applied to the database (22) the behaviour of the database (22) is adapted in accordance with the situation (64).

2. A database management system according to claim 1, wherein the situation is defined by a procedure (64) which includes at least one of a process (65) and an action (66) of a user, wherein at least one of the action (66) and the process (65) relate to at least one of the plurality of entities (61).

3. A database management system according to claim 2, wherein in the context representation includes at least one of the plurality of entities (61) related to the at least one process (65) and action (66).

4. A database management system according to any preceding claim, further comprising an semantic net server (18) for storing the plurality of entities (61) and the relations (62) between the entities (61) as the semantic net (67).

5. A database management system according to any proceeding claim, wherein the subset of the plurality of entities correspond to those entities related to the situation (64).

6. A database management system according to claim 5, wherein the semantic net (67, 68) includes the relations (69) of the subset to each other and to the plurality of entities (61) falling outside the subset.

7. A database management system according to any preceding claim, wherein entities (61) are added to the context representation in accordance with the interaction of the user with the database (22).

8. A database management system according to any of claims 1-7, wherein entities (61) are removed from the context representation in accordance with the interaction of the user with the database (22).

9. A database management system according to any preceding claim, wherein the context representation includes a component which remains unchanged over a relatively long period of time.

10. A database management system according to any preceding claim, wherein the context representation includes a component which remains unchanged over a relatively short period of time.

11. A database management system according to any preceding claim, wherein the semantic net (67) includes the plurality of entities stored in the database (22) and an ontology representing general knowledge to provide an evaluation of relatedness between context entities based on superordinate semantic information.

12. A database management system according to any preceding claim, wherein the semantic net (67) includes references to the plurality of entities stored in the database (22) and an ontology representing domain-specific knowledge to provide an evaluation of relatedness between context entities based on superordinate semantic information.

13. A database management system according to any preceding claim, wherein the user interface is a spreadsheet application in which the situation is defined by a view on the database in terms of a plurality of entries in a plurality of respective cells, wherein each cell has a respective title.

14. A database management system according to claim 13, wherein the context modeller (16) is arranged to complete an incomplete view definition by identifying an appropriate relation between the respective titles.

15. A database management system according to any of preceding claims 13 or 14, wherein the context modeller (16) is arranged to select an appropriate entity for the situation in accordance with the entity's relatedness to a current context.

16. A database management system according to any of preceding claims 13-15, wherein the context modeller (16) is arranged to limit a set of entities to be exported from the database to the spreadsheet in accordance with a current context.

17. A method of managing a data stored in a database, wherein the database stores a plurality of entities (61) related to each other by a plurality of relations (62), the method comprising the steps of:
providing a user interface (11) for interfacing with the database (22) in a situation (64),
modelling a context representation in accordance with the situation, wherein the modelling step includes the step of identifying a subset of the plurality of entities which are relevant to the situation, forming a semantic net (68) including the subset of entities (65, 66) and the relations (69) between the entities included in the subset of entities, and using the semantic net (67, 68) to model the context representation,
applying the context representation to the database (22), so that the behaviour of the database (22) is adapted in accordance with the situation (64).

18. A method according to claim 17, including the step of defining the situation by a procedure (64) which includes at least one of a process (65) and an action (66) of a user, wherein at least one of the action (66) and the process (65) relate to at least one of the plurality of entities (61).

19. A method according to claim 17, including the step of including in the context representation at least one of the plurality of entities (61) related to the at least one process (65) and action (66).

20. A method according to any of the preceding claims 17-19, including the further step of storing the plurality of entities (61) and the relations (62) between the entities (61) in an semantic net server (18) as the semantic net (67, 68).

21. A method according to any of the proceeding claims 17-19, wherein the subset of the plurality of entities correspond to those entities related to the situation (64).

22. A method according to claim 17, including the further step of including in the semantic net (67, 68) the relations of the subset to each other and to the plurality of entities falling outside the subset.

23. A method according to any of the preceding claims 17-22, including the further step of adding entities (61) to the context representation in accordance with the interaction of the user with the database (22).

24. A method according to any of preceding claims 17-23, including the further step of removing entities from the context representation in accordance with the interaction of the user with the database (22).

25. A method according to any of preceding claims 17-24, including the further step of including a component in the context representation which remains unchanged over a relatively long period of time.

26. A method according to any of preceding claims 17-25, including the step of including in the context representation a component which remains unchanged over a relatively short period of time.

27. A method according to any of preceding claims 17-26, including the step of including in the semantic net (67, 68) the plurality of entities stored in the database (22) and an ontology representing general knowledge to provide an evaluation of relatedness between context entities based on superordinate semantic information.

28. A method according to any of claims 17-27, including the step of including in the semantic net the plurality of entities (61) stored in the database (22) and an ontology representing domain-specific knowledge to provide an evaluation of relatedness between context entities based on superordinate semantic information.

29. A method according to any of claims 17-28, wherein the user interface is a spreadsheet application in which the situation is defined by a view on the database in terms of a plurality of entries in a plurality of respective cells, wherein each cell has a respective title.

30. A method according to any of claims 29, including the step of completing an incomplete view definition by identifying an appropriate relation between the respective titles.

31. A method according to any of preceding claims 29 or 30, including the step of selecting an appropriate entity for the situation in accordance with the entity's relatedness to a current context.

32. A method according to any of preceding claims 29-31, including the step of limiting a set of entities to be exported from the database to the spreadsheet in accordance with a current context.

33. A user terminal comprising means operable to perform the method of any of claims 17-32.

34. A program storage device readable by a processing apparatus, said device embodying a program of instructions executable by the processor to perform the steps of any one of claims 17-32.
